# EUROPEAN PATENT APPLICATION

(11) **EP 4 550 463 A1**
(43) Date of publication of application: **07.05.2025**
(21) Application number: 23831134.4
(22) Date of filing: 15.06.2023
(51) Int. Cl.: H01M 4/525, C01G 53/00, H01M 4/505

(54) **POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY**

(30) Priority: 29.06.2022 JP 2022104767
(71) Applicant: Panasonic Intellectual Property Management Co., Ltd., Kadoma-shi, Osaka 571-0057 (JP)
(72) Inventor: TOGO, Masakazu, Kadoma-shi, Osaka 571-0057 (JP); INOUE, Katsuya, Kadoma-shi, Osaka 571-0057 (JP); OGASAWARA, Takeshi, Kadoma-shi, Osaka 571-0057 (JP)
(74) Representative: Novagraaf International SA
(86) International application number: PCT/JP2023/022278
(87) International publication number: WO 2024/004686

(57) **Abstract**

This positive electrode active material, which is contained in a nonaqueous electrolyte secondary battery, contains a lithium transition metal composite oxide; and the lithium transition metal composite oxide contains Ni, Ca and Sr, and comprises secondary particles, each of which is composed of aggregated primary particles. With respect to the distribution of element concentrations in a cross-section of the lithium transition metal composite oxide as determined using time-of-flight secondary ion mass spectrometry, the ratio I_{Ca_OUT}/I_{Ca_IN} of the normalized intensity I_{Ca_OUT} of Ca in the surfaces of the secondary particles to the normalized intensity I_{Ca_IN} of Ca in the insides of the secondary particles satisfies 2 ≤ I_{Ca_OUT}/I_{Ca_IN} ≤ 7, while the ratio I_{Sr_OUT}/I_{Sr_IN} of the normalized intensity I_{Sr_OUT} of Sr in the surfaces of the secondary particles to the normalized intensity I_{Sr_IN} of Sr in the insides of the secondary particles satisfies 2 ≤ I_{Sr_OUT}/I_{Sr_IN} ≤ 7.

## Description

### TECHNICAL FIELD

The present disclosure relates to a positive electrode active material for non-aqueous electrolyte secondary battery and a non-aqueous electrolyte secondary battery.

### BACKGROUND

Lithium nickel oxide (LiNiO₂) has been conventionally known to have a high energy density, and by substituting part of Ni atoms with Co, Al, Mn, and the like, it is possible to improve battery characteristics such as reliability.

Patent Literature 1 discloses a technique of improving the charge-discharge cycle characteristic and safety of a secondary battery by using a positive electrode active material obtained by dissolving Sr in solid solution form in a predetermined ratio in an NCM-based lithium transition metal composite oxide containing Ni, Co, and Mn.

### CITATION LIST

### PATENT LITERATURE

PATENT LITERATURE 1: Japanese Patent Registration No. 6226430

### SUMMARY

A lithium transition metal composite oxide with a Ni content of greater than or equal to 80 % tends to cause side reactions with a non-aqueous electrolyte, and its layered crystal structure is easily destroyed by repeated charging and discharging. Accordingly, there may result problems such as deterioration of the charge-discharge cycle characteristic and elution of metal elements contained in the transition metal layer. In the technique described in Patent Literature 1, no consideration has been made regarding improving battery characteristics when using a lithium transition metal composite oxide with a high Ni content, and there is still room for improvement.

An object of the present disclosure is to provide a positive electrode active material which enables to improve the charge-discharge cycle characteristic of a non-aqueous electrolyte secondary battery and also suppress elution of metal elements contained in the transition metal layer.

A positive electrode active material for non-aqueous electrolyte secondary battery according to one aspect of the present disclosure includes a lithium transition metal composite oxide. The lithium transition metal composite oxide contains Ni, Ca, and Sr, and includes secondary particles formed by aggregation of primary particles. In an element concentration distribution in a cross section of the lithium transition metal composite oxide as determined using time-of-flight secondary ion mass spectrometry, a ratio I_{Ca_OUT}/I_{Ca_IN} of a normalized intensity I_{Ca_OUT} of Ca at a surface of the secondary particles to a normalized intensity I_{Ca_IN} of Ca in an interior of the secondary particles satisfies 2 ≤ I_{Ca_OUT}/I_{Ca_IN} ≤ 7, and a ratio I_{Sr_OUT}/I_{Sr_IN} of a normalized intensity I_{Sr_OUT} of Sr at the surface of the secondary particles to a normalized intensity I_{Sr_IN} of Sr in the interior of the secondary particles satisfies 2 ≤ I_{Sr_OUT}/I_{Sr_IN} ≤ 7.

A non-aqueous electrolyte secondary battery according to one aspect of the present disclosure includes a positive electrode containing the above-described positive electrode active material for non-aqueous electrolyte secondary battery, a negative electrode, and a non-aqueous electrolyte.

According to the positive electrode active material for non-aqueous electrolyte secondary battery according to one aspect of the present disclosure, the charge-discharge cycle characteristic and safety of the non-aqueous electrolyte secondary battery can be improved.

### BRIEF DESCRIPTION OF DRAWINGS

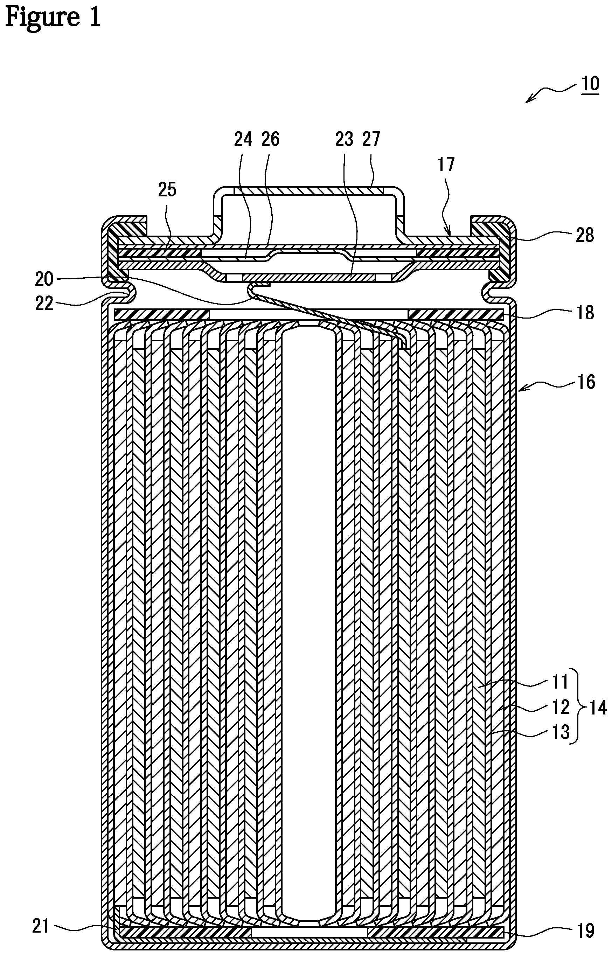

FIG. 1 is a longitudinal cross-sectional view of a non-aqueous electrolyte secondary battery according to an example embodiment.

### DESCRIPTION OF EMBODIMENTS

A layered structure of a lithium transition metal composite oxide includes a transition metal layer, a Li layer, and an oxygen layer, and battery charge-discharge reaction proceeds as Li ions present in the Li layer reversibly move in and out. A lithium transition metal composite oxide containing Ni as the main component is generally known as a high-capacity positive electrode active material. However, in a lithium transition metal composite oxide with a Ni content of greater than or equal to 80 %, there tend to occur side reactions with a non-aqueous electrolyte, and further, since the amount of Li extraction during charging is large, the layered crystal structure is easily destroyed by repeated charging and discharging. For these reasons, the battery may undergo thermal runaway at high temperatures, and there is a problem in safety at high temperatures.

Patent Literature 1 discloses a technique of improving the charge-discharge cycle characteristic and safety of a secondary battery by using a positive electrode active material obtained by dissolving Sr in solid solution form in a predetermined ratio in an NCM-based lithium transition metal composite oxide containing Ni, Co, and Mn. However, in Patent Literature 1, no consideration has been made regarding improving battery characteristics when using a lithium transition metal composite oxide with a high Ni content, and there is still room for improvement.

As a result of conducting intensive studies to solve the above problem, the present inventors have found that, by using a lithium transition metal composite oxide in which Ca and Sr are present at the surface of secondary particles, the charge-discharge cycle characteristic of a non-aqueous electrolyte secondary battery can be improved, and also elution of metal elements such as Ni contained in the transition metal layer can be suppressed. Since metal elements such as Ni that have eluted from the positive electrode may deposit on the negative electrode, suppression of elution of such metal elements contributes to improving safety of the battery. It is presumed that the synergistic effect of Ca and Sr can suppress side reactions with the non-aqueous electrolyte and also stabilize the crystal structure.

An example embodiment of a non-aqueous electrolyte secondary battery according to the present disclosure will now be described in detail. Although a cylindrical battery in which a spiral-type electrode assembly is housed in a cylindrical outer casing is described below as an example, the electrode assembly is not limited to being of a spiral type, and may be of a laminated type formed by alternately laminating a plurality of positive electrodes and a plurality of negative electrodes one by one via separators. Further, the outer casing is not limited to being cylindrical, and may be, for example, rectangular, coin-shaped, or the like, or may be a battery housing composed of a laminate sheet including a metal layer and a resin layer.

FIG. 1 is an axial cross-sectional view of a cylindrical secondary battery 10 according to an example embodiment. As shown in FIG. 1, the secondary battery 10 comprises a spiral-type electrode assembly 14, an electrolyte, and an outer casing 16 that houses the electrode assembly 14 and the electrolyte. The electrode assembly 14 includes a positive electrode 11, a negative electrode 12, and separators 13, and has a spiral structure formed by winding the positive electrode 11 and the negative electrode 12 in a spiral shape with the separators 13 interposed. The outer casing 16 is a bottomed cylindrical metal container having an opening at one axial end, and the opening of the outer casing 16 is closed by a sealing assembly 17. In the following description, for convenience of explanation, the side of the battery toward the sealing assembly 17 will be referred to as "upper", and the side toward the bottom portion of the outer casing 16 will be referred to as "lower".

The positive electrode 11, the negative electrode 12, and the separators 13, which constitute the electrode assembly 14, are all elongate rectangular members, and are alternately laminated in the radial direction of the electrode assembly 14 by being wound lengthwise in a spiral shape. The separators 13 isolate the positive electrode 11 and the negative electrode 12 from each other. The negative electrode 12 is formed to have a size slightly larger than that of the positive electrode 11 in order to prevent lithium deposition. That is, the negative electrode 12 is formed to be longer than the positive electrode 11 in the lengthwise direction and in the widthwise direction. The separators 13 provided as two sheets are formed to have a size slightly larger than at least the positive electrode 11, and are arranged, for example, to sandwich the positive electrode 11. The electrode assembly 14 has a positive electrode lead 20 connected to the positive electrode 11 by welding or the like, and a negative electrode lead 21 connected to the negative electrode 12 by welding or the like. In the electrode assembly 14, the lengthwise direction of the positive electrode 11 and the negative electrode 12 corresponds to the winding direction, and the widthwise direction of the positive electrode 11 and the negative electrode 12 corresponds to the axial direction. That is, the end faces, in the widthwise direction, of the positive electrode 11 and the negative electrode 12 form the axial end faces of the electrode assembly 14.

Above and below the electrode assembly 14, insulation plates 18, 19 are provided respectively. In the example shown in FIG. 1, the positive electrode lead 20 extends through a through hole in the insulation plate 18 and toward the sealing assembly 17, while the negative electrode lead 21 extends outside the insulation plate 19 and toward the bottom portion of the outer casing 16. The positive electrode lead 20 is connected by welding or the like to the lower surface of an internal terminal plate 23 of the sealing assembly 17, and a cap 27, which is the top plate of the sealing assembly 17 electrically connected to the internal terminal plate 23, serves as the positive electrode terminal. The negative electrode lead 21 is connected by welding or the like to the inner surface of the bottom portion of the outer casing 16, and the outer casing 16 serves as the negative electrode terminal.

A gasket 28 is provided between the outer casing 16 and the sealing assembly 17 to ensure airtightness inside the battery. The outer casing 16 has a grooved portion 22 formed thereon, where a part of a side surface portion projects inward, and which supports the sealing assembly 17. The grooved portion 22 is preferably formed in an annular shape along the circumferential direction of the outer casing 16, and supports the sealing assembly 17 on its upper surface. The sealing assembly 17 is fixed to an upper part of the outer casing 16 by means of the grooved portion 22 and an opening end of the outer casing 16 which is crimped to the sealing assembly 17.

The sealing assembly 17 has a structure obtained by laminating, in order from the electrode assembly 14 side, the internal terminal plate 23, a lower vent member 24, an insulation member 25, an upper vent member 26, and the cap 27. Each of the members constituting the sealing assembly 17 has, for example, a disk shape or a ring shape, and the respective members except the insulation member 25 are mutually electrically connected. The lower vent member 24 and the upper vent member 26 are connected to each other at their central portions, and the insulation member 25 is interposed between peripheral edge portions of these vent members. When the internal pressure of the battery increases due to abnormal heat generation, the lower vent member 24 deforms and ruptures in a manner pushing up the upper vent member 26 toward the cap 27, and the current path between the lower vent member 24 and the upper vent member 26 is thereby cut off. When the internal pressure increases further, the upper vent member 26 ruptures, and gas is discharged from an opening in the cap 27.

A detailed description will now be given regarding the positive electrode 11, the negative electrode 12, the separators 13, and the non-aqueous electrolyte, which constitute the secondary battery 10, and in particular regarding the positive electrode 11.

### [Positive Electrode]

The positive electrode 11 comprises, for example, a positive electrode current collector and a positive electrode mixture layer formed on a surface of the positive electrode current collector. The positive electrode mixture layer is preferably formed on both sides of the positive electrode current collector. As the positive electrode current collector, it is possible to use a foil of a metal such as aluminum or an aluminum alloy which is stable in the potential range of the positive electrode 11, a film having such a metal disposed on its surface layer, or the like. The thickness of the positive electrode current collector is, for example, greater than or equal to 10 µm and less than or equal to 30 µm.

The positive electrode mixture layer contains, for example, a positive electrode active material, a conductive agent, and a binder. The thickness of the positive electrode mixture layer is, for example, greater than or equal to 10 µm and less than or equal to 150 µm on one side of the positive electrode current collector. The positive electrode 11 can be produced, for example, by applying a positive electrode mixture slurry containing the positive electrode active material, the conductive agent, and the like onto the surfaces of the positive electrode current collector, and, after drying the applied coating, rolling the coating to form positive electrode mixture layers on both sides of the positive electrode current collector.

Examples of the conductive agent contained in the positive electrode mixture layer include carbon-based particles such as carbon black (CB), acetylene black (AB), Ketjenblack, carbon nanotubes (CNT), graphene, and graphite. These may be used alone, or two or more types may be used in combination.

Examples of the binder contained in the positive electrode mixture layer include fluororesins such as polytetrafluoroethylene (PTFE) and polyvinylidene fluoride (PVDF), polyimide resins, acrylic resins, polyolefin resins, and polyacrylonitrile (PAN). A single type among these may be used alone, or two or more types may be used in combination.

The positive electrode active material contained in the positive electrode mixture layer includes a lithium transition metal composite oxide. The lithium transition metal composite oxide contains Ni, Ca, and Sr.

The content of Ni in the lithium transition metal composite oxide is greater than or equal to 80 mol% based on the total number of moles of metal elements other than Li. With this feature, battery capacity can be improved. The Ni content is preferably greater than or equal to 85 mol%, and more preferably greater than or equal to 90 mol%. From the perspective of structure stabilization, the Ni content is preferably less than or equal to 95 mol%.

The content of Ca in the lithium transition metal composite oxide is preferably greater than or equal to 0.01 mol% and less than or equal to 1 mol%, more preferably greater than or equal to 0.1 mol% and less than or equal to 0.5 mol%, and even more preferably greater than or equal to 0.2 mol% and less than or equal to 0.4 mol%, based on the total number of moles of metal elements other than Li.

The content of Sr in the lithium transition metal composite oxide is preferably greater than or equal to 0.01 mol% and less than or equal to 1 mol%, more preferably greater than or equal to 0.02 mol% and less than or equal to 0.5 mol%, and even more preferably greater than or equal to 0.05 mol% and less than or equal to 0.2 mol%, based on the total number of moles of metal elements other than Li.

The lithium transition metal composite oxide may further contain one or more elements selected from the group consisting of Co, Al, and Mn. The content of each of Co, Al, and Mn in the lithium transition metal composite oxide is, for example, greater than or equal to 0 mol% and less than or equal to 10 mol% based on the total number of moles of metal elements other than Li. Further, the total content of Co, Al, and Mn is, for example, greater than or equal to 0 mol% and less than or equal to 18 mol%.

The lithium transition metal composite oxide may further contain one or more elements selected from the group consisting of Nb, Ti, Zr, W, and Si. The content of each of Nb, Ti, Zr, W, and Si in the lithium transition metal composite oxide is, for example, greater than or equal to 0 mol% and less than or equal to 1 mol% based on the total number of moles of metal elements other than Li. Further, the total content of Nb, Ti, Zr, W, and Si is, for example, greater than or equal to 0 mol% and less than or equal to 2 mol%.

The lithium transition metal composite oxide is, for example, a composite oxide represented by general formula LiₐNiₓM1_{y}M2_{z}CaₛSrₜO_{2-b} (wherein 0.8 ≤ a ≤ 1.2, 0.80 ≤ x ≤ 0.95, 0 ≤ y ≤ 0.18, 0 ≤ z ≤ 0.02, 0.0001 ≤ s ≤ 0.01, 0.0001 ≤ t ≤ 0.01, 0 ≤ b ≤ 0.05, x+y+z+s+t = 1, M1 is one or more elements selected from the group consisting of Co, Al, and Mn, and M2 is one or more elements selected from the group consisting of Nb, Ti, Zr, W, and Si). The ratio of the metal elements contained in the lithium transition metal composite oxide can be measured, for example, by an inductively coupled plasma atomic emission spectrometer (ICP-AES).

The lithium transition metal composite oxide includes secondary particles formed by aggregation of primary particles. The particle size of the primary particles is, for example, greater than or equal to 0.02 µm and less than or equal to 2 µm. The particle size of the primary particles is measured as a diameter of a circle circumscribing a particle image observed by a scanning electron microscope (SEM). The average particle size of the secondary particles is, for example, greater than or equal to 2 µm and less than or equal to 30 µm. Here, the average particle size means the volume-based median diameter (D50). D50 means a particle size at which, in a volume-based particle size distribution, the cumulative frequency from the smaller particle size side reaches 50 %, and is also called the mid-level diameter. The particle size distribution of the secondary particles can be measured with a laser diffraction particle size distribution measuring device (e.g., MT3000II manufactured by MicrotracBEL Corp.) using water as the dispersion medium.

Ca and Sr are present at the surface of the secondary particles and in the interior of the secondary particles. In the interior of the secondary particles, Ca and Sr are present, for example, at the surfaces of the primary particles, and are not dissolved in solid solution form in the interior of the primary particles. With this feature, suppression of side reactions between the non-aqueous electrolyte and the lithium transition metal composite oxide becomes notable. At the surface and in the interior of the secondary particles, Ca may be present as a compound containing Ca. Examples of the compound containing Ca include CaO and CaCO₃. At the surface and in the interior of the secondary particles, Sr may be present as a compound containing Sr. Examples of the compound containing Sr include SrO and SrCO₃. Presence of Ca and Sr at the surface and in the interior of the secondary particles can be confirmed by, for example, energy dispersive X-ray spectroscopy (TEM-EDX), in addition to time-of-flight secondary ion mass spectrometry which will be described later.

In the element concentration distribution in a cross section of the lithium transition metal composite oxide as determined using time-of-flight secondary ion mass spectrometry (TOF-SIMS), a ratio I_{Ca_OUT}/I_{Ca_IN} of a normalized intensity I_{Ca_OUT} of Ca at the surface of the secondary particles to a normalized intensity I_{Ca_IN} of Ca in the interior of the secondary particles satisfies 2 ≤ I_{Ca_OUT}/I_{Ca_IN} ≤ 7, and a ratio I_{Sr_OUT}/I_{Sr_IN} of a normalized intensity I_{Sr_OUT} of Sr at the surface of the secondary particles to a normalized intensity I_{Sr_IN} of Sr in the interior of the secondary particles satisfies 2 ≤ I_{Sr_OUT}/I_{Sr_IN} ≤ 7 (hereinafter, I_{Ca_OUT}/I_{Ca_IN} will be referred to as the normalized intensity ratio of Ca, and I_{Sr_OUT}/I_{Sr__IN} will be referred to as the normalized intensity ratio of Sr). With this feature, the charge-discharge cycle characteristic is improved, and elution of metal elements contained in the transition metal layer is suppressed. The reason for this is presumed to be that the surface of the primary particles, including the surface of the secondary particles, is appropriately protected at the surface and in the interior of the secondary particles.

The normalized intensity ratios of Ca and Sr are obtained by performing measurement using a time-of-flight secondary ion mass spectrometer (TOF-SIMS5 manufactured by IONTOF GmbH) under the following conditions.
Primary ion: Bi³⁺
Ion voltage: 30 kV
Ion current: 0.03 pA @ 100 us
Observation range: 50 µm × 50 µm
Mass range: 60 us (up to 310 amu)
Detection: 4 frames/scan; 150 scans

An image obtained by the above measurement, which shows the concentration distribution of Ni, Ca, and Sr, is divided into 256×256 pixels, and for each pixel, detection intensities of Ni, Ca, and Sr are respectively calculated. Further, a ratio of the detection intensity of Ca to the detection intensity of Ni is calculated as the normalized Ca intensity I_{Ca}, and the ratio of the detection intensity of Sr to the detection intensity of Ni is calculated as the normalized Sr intensity I_{Sr}.

An area from the outer face of the secondary particles to 0.5 µm toward the inside as recognized in the above image is determined as the surface of the secondary particles, and pixels included in this surface of the secondary particles (hereinafter referred to as the surface pixels) are identified. A set of I_{Ca} values corresponding to the respective surface pixels is used as I_{Ca_OUT}, and a set of I_{Sr} values corresponding to the respective surface pixels is used as I_{Sr_OUT}. Further, an area toward the inside from the secondary particle surface defined above is determined as the interior of the secondary particles, and pixels included in this interior of the secondary particles (hereinafter referred to as the interior pixels) are identified. A set of I_{Ca} values corresponding to the respective interior pixels is used as I_{Ca_IN}, and a set of I_{Sr} values corresponding to the respective surface pixels is used as I_{Sr_IN}. Based on the thus obtained normalized intensities of Ca and Sr at the surface and in the interior of the secondary particles, the normalized intensity ratio of Ca (I_{Ca_OUT}/I_{Ca_IN}) and the normalized intensity ratio of Sr (I_{Sr_OUT}/I_{Sr_IN}) are calculated. A sample used for the cross-sectional observation may be a sample obtained by embedding the lithium transition metal composite oxide in a resin or the like, or may be a positive electrode mixture layer containing the lithium transition metal composite oxide.

The lithium transition metal composite oxide may have a layered structure. Examples of the layered structure of the lithium transition metal composite oxide include a layered structure belonging to the space group R-3m, and a layered structure belonging to the space group C2/m. From the perspective of achieving high capacity and stability of crystal structure, the lithium transition metal composite oxide preferably has a layered structure belonging to the space group R-3m. The layered structure of the lithium transition metal composite oxide may include a transition metal layer, a Li layer, and an oxygen layer.

In the layered structure of the lithium transition metal composite oxide, the ratio of metal elements other than Li present in the Li layer is less than or equal to 8 mol% based on the total number of moles of metal elements other than Li in the lithium transition metal composite oxide. If the ratio of metal elements other than Li in the Li layer exceeds 8 mol%, diffusivity of Li ions in the Li layer decreases, which may result in a decrease in battery capacity. While the main metal element other than Li present in the Li layer is Ni, other metal elements may be included. The ratio of metal elements other than Li in the Li layer is, for example, greater than or equal to 0.1 mol%.

The ratio of metal elements other than Li present in the Li layer of the layered structure can be obtained from results of a Rietveld analysis of an X-ray diffraction pattern obtained by X-ray diffraction measurement of the lithium transition metal composite oxide. For the Rietveld analysis of the X-ray diffraction pattern, for example, the Rietveld analysis software PDXL2 (Rigaku Corporation) can be used.

The X-ray diffraction pattern is obtained by powder X-ray diffractometry using a powder X-ray diffractometer (manufactured by Rigaku Corporation, product name "RINT-TTR", using Cu-Kα radiation source) under the following conditions.
Measurement range: 15 to 120 °
Scan speed: 4 °/min
Analysis range: 30 to 120 °
Background: B-spline
Profile function: Split pseudo-Voigt function
Constraint conditions: Li(3a) + Ni(3a) = 1
   Ni(3a) + Ni(3b) = α (α is the Ni content ratio in each case)
ICSD No.: 98-009-4814

The positive electrode mixture layer may contain other positive electrode active materials in addition to the above-described positive electrode active material of the present embodiment. Such other positive electrode active materials include, for example, a lithium transition metal composite oxide which contains Ni, Ca, and Sr, and in which at least one of the normalized intensities of Ca and Sr is less than 2 or greater than 7.

Next, an example method for producing the positive electrode active material according to the present embodiment will be described. For example, the method for producing the positive electrode active material comprises a step of mixing together a metal oxide containing at least Ni, a Li raw material, a Ca raw material, and a Sr raw material to obtain a mixture, and a step of firing the mixture to obtain the positive electrode active material.

The metal oxide containing at least Ni can be produced by adding dropwise an alkaline solution of sodium hydroxide or the like to a solution of a metal salt containing Ni, Co, Al, Mn, and the like while stirring so as to adjust the pH to the alkaline side (e.g., higher than or equal to 8.5 and lower than or equal to 12.5), thereby causing a composite hydroxide to be precipitated (or co-precipitated), and then heat-treating this metal hydroxide. The firing temperature is not subjected to any particular limitation, but is, for example, in the range from 300 °C to 600 °C.

Next, the metal oxide containing at least Ni, a Li raw material, a Ca raw material, and a Sr raw material are mixed, and a mixture is thereby obtained. Examples of the Li raw material include Li₂CO₃, LiOH, Li₂O₂, Li₂O, LiNO₃, LiNO₂, Li₂SO₄, LiOH•H₂O, LiH, and LiF. Examples of the Ca raw material include Ca(OH)₂, CaHPO₄, Ca(H₂PO₄)₂, Ca₃(PO₄)₂, CaO, CaCO₃, CaSO₄, Ca(NO₃)₂, CaCl₂, and CaAlO₄. Examples of the Sr raw material include Sr(OH)₂, SrHPO₄, Sr(H₂PO₄)₂, Sr₃(PO₄)₂, SrO, SrCO₃, SrSO₄, Sr(NO₃)₂, SrCl₂, and SrAlO₄. During the mixing, a Me raw material may be mixed in. Examples of the Me raw material include Nb₂O₅, TiO₂, ZrO₂, WO₃, and SiO₂.

By firing the above mixture, a lithium transition metal composite oxide that serves as the positive electrode active material can be obtained. The mixture is, for example, fired in an oxygen atmosphere. The firing conditions are such that a first heating rate at temperatures higher than or equal to 300 °C and lower than or equal to 680 °C is more than 1.0 °C/min and less than or equal to 4.5 °C/min, and the maximum temperature reached is in the range of higher than or equal to 700 °C and lower than or equal to 850 °C. A second heating rate at temperatures higher than 680 °C and up to the maximum temperature may be, for example, more than or equal to 0.1 °C/min and less than or equal to 3.5 °C/min. Further, the holding time of the maximum temperature reached may be more than or equal to 1 hour and less than or equal to 10 hours. Furthermore, this firing process may be a multi-stage firing process, and each of the first heating rate and the second heating rate may be provided as a plurality of heating rates for separate temperature ranges, so long as those heating rates are within the above-specified ranges. For example, by heating at lower heating rates, dispersion of Ca and Sr can be promoted, and the values of I_{Ca_OUT}/I_{Ca_IN} and I_{Sr_OUT}/I_{Sr_IN} can be increased.

The produced lithium transition metal composite oxide may subsequently be washed with water and dried. The washing with water and drying can be carried out using known methods and conditions. The Me raw material may be added to a cake-like composition obtained after washing with water.

### [Negative Electrode]

The negative electrode 12 comprises, for example, a negative electrode current collector and a negative electrode mixture layer formed on a surface of the negative electrode current collector. The negative electrode mixture layer is preferably formed on both sides of the negative electrode current collector. As the negative electrode current collector, it is possible to use a foil of a metal such as copper or a copper alloy which is stable in the potential range of the negative electrode 12, a film having such a metal disposed on its surface layer, or the like. The thickness of the negative electrode current collector is, for example, greater than or equal to 5 µm and less than or equal to 30 µm. The negative electrode mixture layer contains, for example, a negative electrode active material and a binder. The thickness of the negative electrode mixture layer is, for example, greater than or equal to 10 µm and less than or equal to 150 µm on one side of the negative electrode current collector. The negative electrode 12 can be produced, for example, by applying a negative electrode mixture slurry containing the negative electrode active material, the binder, and the like onto the surfaces of the negative electrode current collector, and, after drying the applied coating, rolling the coating to form negative electrode mixture layers on both sides of the negative electrode current collector.

No particular limitation is imposed on the negative electrode active material contained in the negative electrode mixture layer so long as it can reversibly occlude and release lithium ions, and a carbon material such as graphite is generally used therefor. The graphite may be either natural graphite such as flake graphite, massive graphite, and earthy graphite, or artificial graphite such as massive artificial graphite and graphitized mesophase carbon microbeads. Further, as the negative electrode active material, a metal that forms an alloy with Li such as Si and Sn, a metal compound containing Si, Sn, or the like, a lithium-titanium composite oxide, and the like may be used, and these materials having a carbon coating provided thereon may also be used. For example, in combination with graphite, it is possible to use a Si-containing compound represented by SiOₓ (where 0.5 ≤ x ≤ 1.6), a Si-containing compound in which fine particles of Si are dispersed in a lithium silicate phase represented by Li_{2y}SiO_{(2+y)} (where 0 < y < 2), or the like.

Examples of the binder contained in the negative electrode mixture layer include styrene-butadiene rubber (SBR), nitrile-butadiene rubber (NBR), carboxymethyl cellulose (CMC) or a salt thereof, polyacrylic acid (PAA) or a salt thereof (which may be PAA-Na, PAA-K, or the like, or a partially neutralized salt), and polyvinyl alcohol (PVA). A single type among these may be used alone, or two or more types may be used in combination.

### [Separator]

As the separator 13, for example, a porous sheet having ion permeability and insulation property is used. Specific examples of the porous sheet include a microporous thin film, woven fabric, and non-woven fabric. As the material of the separator, polyolefins such as polyethylene and polypropylene, cellulose, and the like are suitable. The separator 13 may have a single-layer structure or a laminated structure. Further, on the surface of the separator 13, there may be provided a highly heat-resistant resin layer made of aramid resin or the like, or a filler layer containing an inorganic compound filler.

### [Non-Aqueous Electrolyte]

The non-aqueous electrolyte contains, for example, a non-aqueous solvent and an electrolyte salt dissolved in the non-aqueous solvent. As the non-aqueous solvent, it is possible to use, for example, esters, ethers, nitriles such as acetonitrile, amides such as dimethylformamide, a mixed solvent containing two or more of the foregoing, and the like. The non-aqueous solvent may contain a halogen-substituted product obtained by substituting at least part of hydrogen atoms in the above solvents with halogen atoms such as fluorine. Examples of the halogen-substituted product include fluorinated cyclic carbonate esters such as fluoroethylene carbonate (FEC), fluorinated chain carbonate esters, and fluorinated chain carboxylate esters such as methyl fluoropropionate (FMP).

Examples of the above-noted esters include: cyclic carbonate esters such as ethylene carbonate (EC), propylene carbonate (PC), and butylene carbonate; chain carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylate esters such as γ-butyrolactone (GBL) and γ-valerolactone (GVL); and chain carboxylate esters such as methyl acetate, ethyl acetate, propyl acetate, methyl propionate (MP), and ethyl propionate (EP).

Examples of the above-noted ethers include: cyclic ethers such as 1,3-dioxolane, 4-methyl-1,3-dioxolane, tetrahydrofuran, 2-methyltetrahydrofran, propylene oxide, 1,2-butylene oxide, 1,3-dioxane, 1,4-dioxane, 1,3,5-trioxane, furan, 2-methylfuran, 1,8-cineole, and crown ethers; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (where 1 < x < 6, and n is 1 or 2), LiB₁₀Cl₁₀, LiCl, LiBr, LiI, chloroborane lithium, lower aliphatic lithium carboxylate, borate salts such as Li₂B₄O₇ and Li(B(C₂O₄)F₂), and imide salts such as LiN(SO₂CF₃)₂ and LiN(CₗF₂ₗ₊₁SO₂)(CₘF₂ₘ₊₁SO₂) (where each of l and m is an integer of 0 or greater). As the lithium salt, a single type among these may be used alone, or a plurality of types may be mixed and used. Among the foregoing, it is preferable to use LiPF₆ from the perspective of ion conductivity, electrochemical stability, and the like. The concentration of the lithium salt is, for example, more than or equal to 0.5 mol and less than or equal to 2 mol per 1 liter of the non-aqueous solvent. Further, vinylene carbonate, a propane sultone based additive, and the like may be added.

### EXAMPLES

While the present disclosure will now be further described using Examples and Comparative Examples, the present disclosure is not limited to the Examples below.

### <Example 1-1>

### [Production of Positive Electrode Active Material]

A composite hydroxide represented by [Ni_{0.90}Co_{0.05}Al_{0.05}](OH)₂ and obtained by a co-precipitation method was fired at 500 °C for 8 hours, and a metal oxide (Ni_{0.90}Co_{0.05}Al_{0.05}O₂) was obtained. Next, Ca(OH)₂ and Sr(OH)₂ were added to this metal oxide so that the molar ratio of Ca was 0.25 mol% and the molar ratio of Sr was 0.05 mol% based on the total amount of Ni, Co, and Al. Further, lithium hydroxide monohydrate (LiOH•H₂O) was mixed in so that the molar ratio of Li to the total amount of Ni, Co, Al, Ca, and Sr was 103 mol%, and a mixture was obtained. This mixture was fired in an oxygen stream having an oxygen concentration of 95% (with a flow rate of 5 L/min per 1 kg of the mixture) at a first heating rate of 2 °C/min from room temperature to 650 °C, and subsequently at a second heating rate of 1 °C/min from 650 °C to 720 °C, and a lithium transition metal composite oxide was obtained. This lithium transition metal composite oxide was washed with water and dried, and a positive electrode active material of Example 1-1 was obtained.

The positive electrode active material was measured using an inductively coupled plasma atomic emission spectrometer (ICP-AES), and as a result, elements listed in Table 1 shown below, which correspond to elements other than Li and O, were confirmed to be present. Element concentration distribution in a cross section of the positive electrode active material was measured by time-of-flight secondary ion mass spectrometry (TOF-SIMS), and as a result, the normalized intensity ratio of Ca (I_{CaOUT}/I_{Ca_IN}) was 2.7, and the normalized intensity ratio of Sr (I_{Sr_OUT}/I_{Sr_IN}) was 5.4. The ratio of metal elements other than Li present in the Li layer was 2.0 mol% based on the total number of moles of metal elements other than Li in the lithium transition metal composite oxide.

### [Production of Positive Electrode]

A positive electrode mixture slurry was prepared by mixing together 95 parts by mass of the above positive electrode active material, 3 parts by mass of acetylene black (AB), and 2 parts by mass of polyvinylidene fluoride (PVDF), and further adding thereto an appropriate amount of N-methyl-2-pyrrolidone (NMP). Next, the positive electrode mixture slurry was applied onto both sides of a positive electrode current collector made of aluminum foil, and the applied coating was dried. After that, the coating was rolled using a roller, the resulting product was cut into a predetermined electrode size, and a positive electrode was thereby produced. In a part of the positive electrode, there was provided an exposed portion where a surface of the positive electrode current collector was exposed.

### [Production of Negative Electrode]

Natural graphite was used as the negative electrode active material. A negative electrode mixture slurry was prepared by mixing the negative electrode active material, sodium carboxymethyl cellulose (CMC-Na), and styrene-butadiene rubber (SBR) in a solids mass ratio of 100: 1: 1 in an aqueous solution. Next, the negative electrode mixture slurry was applied onto both sides of a negative electrode current collector made of copper foil, and the applied coating was dried. After that, the coating was rolled using a roller, the resulting product was cut into a predetermined electrode size, and a negative electrode was thereby produced. In a part of the negative electrode, there was provided an exposed portion where a surface of the negative electrode current collector was exposed.

### [Preparation of Non-Aqueous Electrolyte]

Ethylene carbonate (EC), methyl ethyl carbonate (MEC), and dimethyl carbonate (DMC) were mixed together in a volume ratio of 3:3:4. Into this mixed solvent, lithium hexafluorophosphate (LiPF₆) was dissolved to a concentration of 1.2 mol/L, and a non-aqueous electrolyte was thereby prepared.

### [Production of Test Cell]

A positive electrode lead was attached to the exposed portion of the positive electrode, and a negative electrode lead was attached to the exposed portion of the negative electrode. The positive electrode and the negative electrode were wound in a spiral shape with an interposed separator made of polyolefin, and the resulting product was shaped by being pressed in a radial direction to produce a flat-shaped spiral-type electrode assembly. This electrode assembly was housed in an outer casing composed of an aluminum laminate sheet, and after injecting the above-described non-aqueous electrolyte therein, the opening of the outer casing was sealed to obtain a test cell.

### [Evaluation of Capacity Retention Rate]

In an ambient temperature of 25 °C, the test cell was charged at a constant current of 0.3 C until reaching 4.2 V, and then charged at a constant voltage of 4.2 V until reaching 0.02 C. After that, the test cell was discharged at a constant current of 0.5 C until reaching 2.5 V. Using this charging and discharging process as one cycle, 300 cycles were performed. The capacity retention rate of the test cell after the charge-discharge cycles was calculated by the following formula. Capacity retention rate = (Discharge capacity in the 300th cycle / Discharge capacity in the 1st cycle) × 100

### [Evaluation of Amount of Metal Element Elution]

The above non-aqueous electrolyte secondary battery was fully charged, and then stored in a thermostatic chamber at 60 °C for 14 days. After 14 days, the non-aqueous electrolyte secondary battery was disassembled in a glove box, and the negative electrode was removed. The removed negative electrode was immersed in 100 ml of 0.2 N aqueous hydrochloric acid solution at 100 °C for 10 minutes, and Mn and Ni deposited on the negative electrode were thereby dissolved. Further, the negative electrode was eliminated by filtration, and the filtrate was then diluted in a measuring flask to obtain a sample. The amount, in the sample, of the metal elements contained in the transition metal layer was quantified by ICP-AES, and an amount of metal element elution was calculated by the following formula. A lower amount of metal element elution indicates that elution of the metal elements from the positive electrode active material during the above-described storage process was suppressed.

Amount of metal element elution = Mass of metal elements / Mass of negative electrode

### <Examples 1-2 to 1-5>

A test cell was produced and evaluated in the same manner as in Example 1-1 except that, in the production of the positive electrode active material, the amounts of Ca(OH)₂ and Sr(OH)₂ added were changed so that the molar ratios of Ca and Sr to the total amount of Ni, Co, and Al were equal to the values shown in Table 1, and as to Examples 1-3 to 1-5, the mixture was prepared by further adding ZrO₂, TiO₂, or Nb₂O₅ so that the molar ratio of Zr, Ti, or Nb to the total amount of Ni, Co, and Al was equal to the value shown in Table 1.

### <Comparative Examples 1-1 to 1-6>

A test cell was produced and evaluated in the same manner as in Example 1-1 except that, in the production of the positive electrode active material, the amounts of Ca(OH)₂ and Sr(OH)₂ added were changed so that the molar ratios of Ca and Sr to the total amount of Ni, Co, and Al were equal to the values shown in Table 1, the first heating rate was changed to 5 °C/min, and the second heating rate was changed to 3 °C/min.

### <Example 2-1>

A test cell was produced and evaluated in the same manner as in Example 1-1 except that, in the production of the positive electrode active material, the composition of the metal oxide was changed to Ni_{0.93}Al_{0.04}Mn_{0.03}, and Ca(OH)₂ and Sr(OH)₂ were added so that the molar ratio of Ca was 0.30 mol% and the molar ratio of Sr was 0.09 mol% based on the total amount of Ni, Al, and Mn.

### <Examples 2-2 to 2-4>

A test cell was produced and evaluated in the same manner as in Example 2-1 except that, in the production of the positive electrode active material, the mixture was prepared by further adding ZrO₂, TiO₂, or Nb₂O₅ so that the molar ratio of Zr, Ti, or Nb to the total amount of Ni, Al, and Mn was equal to the value shown in Table 2.

### <Comparative Examples 2-1 to 2-2>

A test cell was produced and evaluated in the same manner as in Example 2-1 except that, in the production of the positive electrode active material, the amounts of Ca(OH)₂ and Sr(OH)₂ added were changed so that the molar ratios of Ca and Sr to the total amount of Ni, Co, and Al were equal to the values shown in Table 2, the first heating rate was changed to 5 °C/min, and the second heating rate was changed to 3 °C/min.

### <Example 3-1>

A test cell was produced and evaluated in the same manner as in Example 1-1 except that, in the production of the positive electrode active material, the composition of the metal oxide was changed to Ni_{0.90}Co_{0.04}Mn_{0.06}, and Ca(OH)₂ and Sr(OH)₂ were added so that the molar ratio of Ca was 0.27 mol% and the molar ratio of Sr was 0.09 mol% based on the total amount of Ni, Co, and Mn.

### <Examples 3-2 to 3-8>

A test cell was produced and evaluated in the same manner as in Example 3-1 except that, in the production of the positive electrode active material, the mixture was prepared by further adding Nb₂O₅, ZrO₂, WO₃, TiO₂, or SiO₂ so that the molar ratio of Nb, Zr, W, Ti, or Si to the total amount of Ni, Co, and Mn was equal to the value shown in Table 3.

### <Comparative Examples 3-1 to 3-2>

A test cell was produced and evaluated in the same manner as in Example 3-1 except that, in the production of the positive electrode active material, the amounts of Ca(OH)₂ and Sr(OH)₂ added were changed so that the molar ratios of Ca and Sr to the total amount of Ni, Co, and Al were equal to the values shown in Table 3, the first heating rate was changed to 5 °C/min, and the second heating rate was changed to 3 °C/min.

### <Example 4-1>

A test cell was produced and evaluated in the same manner as in Example 1-1 except that, in the production of the positive electrode active material, the composition of the metal oxide was changed to Ni_{0.90}Mn_{0.10}, and Ca(OH)₂ and Sr(OH)₂ were added so that the molar ratio of Ca was 0.28 mol% and the molar ratio of Sr was 0.10 mol% based on the total amount of Ni and Mn.

### <Examples 4-2 to 4-6>

A test cell was produced and evaluated in the same manner as in Example 4-1 except that, in the production of the positive electrode active material, the mixture was prepared by further adding Nb₂O₅, ZrO₂, WO₃, TiO₂, or SiO₂ so that the molar ratio of Nb, Zr, W, Ti, or Si to the total amount of Ni and Mn was equal to the value shown in Table 4.

### <Comparative Examples 4-1 to 4-2>

A test cell was produced and evaluated in the same manner as in Example 4-1 except that, in the production of the positive electrode active material, the amounts of Ca(OH)₂ and Sr(OH)₂ added were changed so that the molar ratios of Ca and Sr to the total amount of Ni, Co, and Al were equal to the values shown in Table 4, the first heating rate was changed to 5 °C/min, and the second heating rate was changed to 3 °C/min.

The evaluation results of the test cells of the Examples and Comparative Examples are shown in separate groups in Tables 1 to 4. Each of Tables 1 to 4 also shows the composition of the metal oxide and the ratios of the additives used in preparing the positive electrode active material, the normalized intensity ratios of Ca and Sr, and the ratio of metal elements other than Li in the Li layer. In Table 1, the capacity retention rates and the amounts of metal element elution of the test cells other than that of Comparative Example 1-1 are expressed relative to the capacity retention rate and the amount of metal element elution of the test cell of Comparative Example 1-1, each of which is assumed to be 100. In Table 2, the capacity retention rates and the amounts of metal element elution of the test cells other than that of Comparative Example 2-1 are expressed relative to the capacity retention rate and the amount of metal element elution of the test cell of Comparative Example 2-1, each of which is assumed to be 100. In Table 3, the capacity retention rates and the amounts of metal element elution of the test cells other than that of Comparative Example 3-1 are expressed relative to the capacity retention rate and the amount of metal element elution of the test cell of Comparative Example 3-1, each of which is assumed to be 100. In Table 4, the capacity retention rates and the amounts of metal element elution of the test cells other than that of Comparative Example 4-1 are expressed relative to the capacity retention rate and the amount of metal element elution of the test cell of Comparative Example 4-1, each of which is assumed to be 100.

**[Table 1]**

| | Metal oxide [mol%] | | | | Additives [mol%] | | | Normalized intensity ratios | | Ratio of metal elements other than Li in Li layer [%] | Capacity retention rate | Amount of metal elution |
|---|---|---|---|---|---|---|---|---|---|---|---|---|
| | Ni | Co | Al | Mn | M2 | Ca | Sr | Ca | Sr | | | |
| Example 1-1 | 90 | 5 | 5 | 0 | - | 0.25 | 0.05 | 2.7 | 5.4 | 2.0 | 115 | 80 |
| Example 1-2 | 90 | 5 | 5 | 0 | - | 0.26 | 0.15 | 2.2 | 3.5 | 2.5 | 108 | 94 |
| Example 1-3 | 90 | 5 | 5 | 0 | Zr 0.1 | 0.23 | 0.09 | 2.9 | 4.2 | 2.5 | 110 | 83 |
| Example 1-4 | 90 | 5 | 5 | 0 | Ti 0.1 | 0.28 | 0.09 | 2.1 | 4.5 | 2.5 | 112 | 82 |
| Example 1-5 | 90 | 5 | 5 | 0 | Nb 0.1 | 0.30 | 0.09 | 4.6 | 4.8 | 2.1 | 104 | 88 |
| Comparative Example 1-1 | 90 | 5 | 5 | 0 | - | 0.25 | 0 | 1.4 | - | 1.8 | 100 | 100 |
| Comparative Example 1-2 | 90 | 5 | 5 | 0 | - | 0 | 0.08 | - | 1.1 | 1.9 | 75 | 103 |
| Comparative Example 1-3 | 90 | 5 | 5 | 0 | - | 1.20 | 0.15 | 7.6 | 5.4 | 1.6 | 95 | 95 |
| Comparative Example 1-4 | 90 | 5 | 5 | 0 | - | 0.05 | 1.00 | 0.6 | 5.3 | 1.8 | 88 | 100 |
| Comparative Example 1-5 | 90 | 5 | 5 | 0 | - | 0.25 | 1.00 | 2.9 | 8.2 | 2.4 | 92 | 97 |
| Comparative Example 1-6 | 90 | 5 | 5 | 0 | - | 0.10 | 0.02 | 2.8 | 0.4 | 2.3 | 100 | 101 |

**[Table 2]**

| | Metal oxide [mol%] | | | | Additives [mol%] | | | Normalized intensity ratios | | Ratio of metal elements other than Li in Li layer [%] | Capacity retention rate | Amount of metal elution |
|---|---|---|---|---|---|---|---|---|---|---|---|---|
| | Ni | Co | Al | Mn | M2 | Ca | Sr | Ca | Sr | | | |
| Example 2-1 | 93 | 0 | 4 | 3 | - | 0.30 | 0.09 | 2.8 | 4.8 | 3.4 | 111 | 93 |
| Example 2-2 | 93 | 0 | 4 | 3 | Zr 0.1 | 0.30 | 0.09 | 3.1 | 5.2 | 3.7 | 108 | 88 |
| Example 2-3 | 93 | 0 | 4 | 3 | Ti 0.1 | 0.30 | 0.09 | 2.8 | 6.1 | 2.9 | 109 | 91 |
| Example 2-4 | 93 | 0 | 4 | 3 | Nb 0.1 | 0.30 | 0.09 | 3.9 | 4.8 | 3.2 | 109 | 97 |
| Comparative Example 2-1 | 93 | 0 | 4 | 3 | - | 0.30 | 0 | 1.4 | - | 3.6 | 100 | 100 |
| Comparative Example 2-2 | 93 | 0 | 4 | 3 | - | 0 | 0.09 | - | 1.5 | 3.3 | 85 | 102 |

**[Table 3]**

| | Metal oxide [mol%] | | | | Additives [mol%] | | | Normalized intensity ratios | | Ratio of metal elements other than Li in Li layer [%] | Capacity retention rate | Amount of metal elution |
|---|---|---|---|---|---|---|---|---|---|---|---|---|
| | Ni | Co | Al | Mn | M2 | Ca | Sr | Ca | Sr | | | |
| Example 3-1 | 90 | 4 | 0 | 6 | - | 0.27 | 0.09 | 2.4 | 4.9 | 2.8 | 108 | 95 |
| Example 3-2 | 90 | 4 | 0 | 6 | Nb 0.5 | 0.27 | 0.09 | 4.2 | 5.6 | 3.5 | 115 | 90 |
| Example 3-3 | 90 | 4 | 0 | 6 | Zr 0.5 | 0.27 | 0.09 | 2.8 | 6.4 | 2.8 | 112 | 94 |
| Example 3-4 | 90 | 4 | 0 | 6 | W 0.5 | 0.27 | 0.09 | 3.1 | 6.1 | 3.1 | 114 | 92 |
| Example 3-5 | 90 | 4 | 0 | 6 | Ti 0.5 | 0.27 | 0.09 | 2.2 | 5.9 | 3.1 | 109 | 95 |
| Example 3-6 | 90 | 4 | 0 | 6 | Si 0.5 | 0.27 | 0.09 | 3.1 | 5.8 | 3.4 | 110 | 94 |
| Example 3-7 | 90 | 4 | 0 | 6 | Nb 0.5 | 0.27 | 0.09 | 2.8 | 4.9 | 3.2 | 117 | 89 |
| | | | | | Zr 0.5 | | | | | | | |
| Example 3-8 | 90 | 4 | 0 | 6 | Nb 0.5 | 0.27 | 0.09 | 2.7 | 5.3 | 3.2 | 116 | 88 |
| | | | | | Ti 0.5 | | | | | | | |
| Comparative Example 3-1 | 90 | 4 | 0 | 6 | - | 0.27 | 0 | 1.2 | - | 3.3 | 100 | 100 |
| Comparative Example 3-2 | 90 | 4 | 0 | 6 | - | 0 | 0.09 | - | 1.4 | 3.6 | 93 | 112 |

**[Table 4]**

| | Metal oxide [mol%] | | | | Additives [mol%] | | | Normalized intensity ratios | | Ratio of metal elements other than Li in Li layer [%] | Capacity retention rate | Amount of metal elution |
|---|---|---|---|---|---|---|---|---|---|---|---|---|
| | Ni | Co | Al | Mn | M2 | Ca | Sr | Ca | Sr | | | |
| Example 4-1 | 90 | 0 | 0 | 10 | - | 0.28 | 0.10 | 2.7 | 5.5 | 5.1 | 106 | 96 |
| Example 4-2 | 90 | 0 | 0 | 10 | Nb 0.5 | 0.28 | 0.10 | 4.3 | 4.9 | 4.9 | 112 | 93 |
| Example 4-3 | 90 | 0 | 0 | 10 | Zr 0.5 | 0.28 | 0.10 | 3.1 | 5.7 | 4.3 | 110 | 91 |
| Example 4-4 | 90 | 0 | 0 | 10 | W 0.5 | 0.28 | 0.10 | 2.1 | 6.1 | 5.6 | 112 | 97 |
| Example 4-5 | 90 | 0 | 0 | 10 | Ti 0.5 | 0.28 | 0.10 | 3.0 | 4.5 | 5.4 | 108 | 95 |
| Example 4-6 | 90 | 0 | 0 | 10 | Si 0.5 | 0.28 | 0.10 | 2.5 | 5.8 | 5.0 | 109 | 90 |
| Comparative Example 4-1 | 90 | 0 | 0 | 10 | - | 0.28 | 0 | 1.2 | - | 5.4 | 100 | 100 |
| Comparative Example 4-2 | 90 | 0 | 0 | 10 | - | 0 | 0.10 | - | 1.5 | 5.1 | 88 | 107 |

In Tables 1 to 4, the test cells of the Examples have higher capacity retention rates and lower amounts of metal elution compared to the test cells of the Comparative Examples. Accordingly, it can be seen that the charge-discharge cycle characteristic is improved and elution of metal elements contained in the transition metal layer is suppressed by including, in the positive electrode active material, a lithium transition metal composite oxide in which the normalized intensity ratio of Ca (I_{Ca_OUT}/I_{Ca_IN}) and the normalized intensity ratio of Sr (I_{Sr_OUT}/I_{Sr_IN}) are greater than or equal to 2 and less than or equal to 7.

The present disclosure is further described by the following embodiments.

### Configuration 1:

A positive electrode active material for non-aqueous electrolyte secondary battery, including a lithium transition metal composite oxide, wherein
the lithium transition metal composite oxide contains Ni, Ca, and Sr, and includes secondary particles formed by aggregation of primary particles,
in an element concentration distribution in a cross section of the lithium transition metal composite oxide as determined using time-of-flight secondary ion mass spectrometry, a ratio I_{Ca_OUT}/I_{Ca_IN} of a normalized intensity I_{Ca_OUT} of Ca at a surface of the secondary particles to a normalized intensity I_{Ca_IN} of Ca in an interior of the secondary particles satisfies 2 ≤ I_{Ca_OUT}/I_{Ca_IN} ≤ 7, and a ratio I_{Sr_OUT}/I_{Sr_IN} of a normalized intensity I_{Sr_OUT} of Sr at the surface of the secondary particles to a normalized intensity I_{Sr_IN} of Sr in the interior of the secondary particles satisfies 2 ≤ I_{Sr_OUT}/I_{Sr_IN} ≤ 7.

### Configuration 2:

The positive electrode active material for non-aqueous electrolyte secondary battery according to Configuration 1, wherein a content of Ni in the lithium transition metal composite oxide is greater than or equal to 80 mol% based on a total number of moles of metal elements other than Li in the lithium transition metal composite oxide.

### Configuration 3:

The positive electrode active material for non-aqueous electrolyte secondary battery according to Configuration 1 or 2, wherein
the lithium transition metal composite oxide has a layered structure, and
a ratio of metal elements other than Li present in a Li layer of the layered structure is less than or equal to 8 mol% based on a total number of moles of metal elements other than Li in the lithium transition metal composite oxide.

### Configuration 4:

The positive electrode active material for non-aqueous electrolyte secondary battery according to any one of Configurations 1 to 3, wherein the lithium transition metal composite oxide further contains one or more elements selected from the group consisting of Co, Al, and Mn.

### Configuration 5:

The positive electrode active material for non-aqueous electrolyte secondary battery according to any one of Configurations 1 to 4, wherein the lithium transition metal composite oxide further contains one or more elements selected from the group consisting of Nb, Ti, Zr, W, and Si.

### Configuration 6:

A non-aqueous electrolyte secondary battery, comprising a positive electrode including the positive electrode active material for non-aqueous electrolyte secondary battery according to any one of Configurations 1 to 5, a negative electrode, and a non-aqueous electrolyte.

### REFERENCE SIGNS LIST

10 secondary battery; 11 positive electrode; 12 negative electrode; 13 separator; 14 electrode assembly; 16 outer casing; 17 sealing assembly; 18, 19 insulation plate; 20 positive electrode lead; 21 negative electrode lead; 22 grooved portion; 23 internal terminal plate; 24 lower vent member; 25 insulation member; 26 upper vent member; 27 cap; 28 gasket.

## Claims

1. A positive electrode active material for non-aqueous electrolyte secondary battery, including a lithium transition metal composite oxide, wherein
the lithium transition metal composite oxide contains Ni, Ca, and Sr, and includes secondary particles formed by aggregation of primary particles,
in an element concentration distribution in a cross section of the lithium transition metal composite oxide as determined using time-of-flight secondary ion mass spectrometry, a ratio I_{Ca_OUT}/I_{Ca_IN} of a normalized intensity I_{Ca_OUT} of Ca at a surface of the secondary particles to a normalized intensity I_{Ca_IN} of Ca in an interior of the secondary particles satisfies 2 ≤ I_{Ca_OUT}/I_{Ca_IN} ≤ 7, and a ratio I_{Sr_OUT}/I_{Sr__IN} of a normalized intensity I_{Sr_OUT} of Sr at the surface of the secondary particles to a normalized intensity I_{Sr_IN} of Sr in the interior of the secondary particles satisfies 2 ≤ I_{Sr_OUT}/I_{Sr_IN} ≤ 7.

2. The positive electrode active material for non-aqueous electrolyte secondary battery according to claim 1, wherein a content of Ni in the lithium transition metal composite oxide is greater than or equal to 80 mol% based on a total number of moles of metal elements other than Li in the lithium transition metal composite oxide.

3. The positive electrode active material for non-aqueous electrolyte secondary battery according to claim 1, wherein
the lithium transition metal composite oxide has a layered structure, and
a ratio of metal elements other than Li present in a Li layer of the layered structure is less than or equal to 8 mol% based on a total number of moles of metal elements other than Li in the lithium transition metal composite oxide.

4. The positive electrode active material for non-aqueous electrolyte secondary battery according to claim 1, wherein the lithium transition metal composite oxide further contains one or more elements selected from the group consisting of Co, Al, and Mn.

5. The positive electrode active material for non-aqueous electrolyte secondary battery according to claim 1, wherein the lithium transition metal composite oxide further contains one or more elements selected from the group consisting of Nb, Ti, Zr, W, and Si.

6. A non-aqueous electrolyte secondary battery, comprising a positive electrode including the positive electrode active material for non-aqueous electrolyte secondary battery according to any one of claims 1 to 5, a negative electrode, and a non-aqueous electrolyte.
